# EUROPEAN PATENT SPECIFICATION

(11) **EP 0 557 476 B1**
(45) Date of publication and mention of the grant of the patent: **21.10.1998**
(21) Application number: 92917172.6
(22) Date of filing: 29.07.1992
(51) Int. Cl.: C08L 61/28, C08L 61/32

(54) **AMINOPLAST RESIN OR AMINOPLAST RESIN PRECURSOR**
AMINOPLASTHARZ ODER AMINOPLASTHARZVORLÄUFER
AMINOPLASTE OU PRECURSEUR D'AMINOPLASTE

(30) Priority: 15.08.1991 US 745407; 30.10.1991 US 785390
(43) Date of publication of application: 01.09.1993
(73) Proprietor: BASF CORPORATION, Parsippany, NJ 07054 (US)
(72) Inventor: BRADFORD, Christopher, J., Ann Arbor, MI 48108 (US); TICU, Adriana, Livonia, MI 48152 (US); DESCHEPPER, Richard E., Greenville, Ohio 45331 (US)
(74) Representative: Fitzner, Uwe
(86) International application number: US9206426
(87) International publication number: WO9304121

(56) References cited:
- EP-A- 0 138 448
- WO-A-88/09323
- US-A- 2 325 376
- US-A- 4 585 853
- US-A- 5 068 279

## Description

This invention relates to aminoplast resins or precursors thereof having functional groups thereon.

This invention also relates to the use of β-diketoesters or β-diketones for reducing the residual aldehyde level in a method for preparing aminoplast resins and/or for reducing the amount of aldehyde released during the cure in a method for curing aminoplast resins.

### Background of the Invention

Aminoplast resins are thermosetting resins made by the reaction of an aminoplast resin precursor (e.g., an amine such as melamine, urea, or an amide) with an aldehyde (e,g., formaldehyde). The resins can be used in a variety of applications, including molding, protective coatings, ion-exchange resins, and adhesives, to name but a few. Common thermosetting aminoplast resins are trimethylol melamine, methylol urea, dimethylol urea, ethylene diamine, benzoguanamine, fully alkylated melamine, and partially alkylated melamine. Aminoplast resins are also highly useful as cross-linking agents for other polymers, such as acrylic polymers (e.g., amino- or hydroxyl-functional: acrylic polymers, polyesters, epoxides, phenolics, and urethanes). Alkylated aminoplast resins (e.g., butylated trimethylol melamine) are useful as cross-linking agents.

One problem with aminoplast resins is related to the aldehyde used in the formation of the resin. The aldehyde is usually not fully consumed during the reaction with the aminoplast resin precursor, so some residual aldehyde is present in the uncured resin. Also, when the resin is cured, relatively large quantities of aldehyde are released as a result of the curing stage. Many aldehydes, such as formaldehyde, exhibit undesirable toxic and carcinogenic properties. It would thus be desirable if reductions could be achieved in the level of aldehyde present in uncured aminoplast resins and/or the amount of aldehyde released during the cure of aminoplast resins. It is toward this goal that the present invention is directed.

US-A-2,325,376 discloses aminoplasts internally modified with a ketoester and in US-A-4,585,853 co-condensation products of ketone-aldehyde resins are described which are obtainable by the co-condensation of at least one ketone and at least one aldehyde with at least one acid group introducing compound and with at least one aminoplast former.

The present invention is directed to the use of β-diketoesters or β-diketones for reducing the residual aldehyde level in a method for preparing aminoplast resins and/or for reducing the amount of aldehyde released during the cure in a method for curing aminoplast resins wherein the β-diketoesters or β-diketones are reacted with an aminoplast resin or an aminoplast resin precursor thereby incorporating a β-dicarbonyl functionality or an unsaturation functionality into the aminoplast resin or the aminoplast resin precursor wherein the β-dicarbonyl functionality has the formula - NR³CH₂-O-CO-CH₂-CO-R¹ or -NR³CH₂-CH(-CO-R¹) (-CO-R²) and the unsaturation functionality has the formula -NR³CR¹=CH-COR² or -N=CR¹-CH₂-COR², wherein R¹ represents alkyl or aryl, R² represents alkyl, aryl or alkoxy, and R³ represents -H, alkyl, aryl or CH₂OR⁴ wherein R⁴ represents alkyl, aryl, cycloaliphatic or hydrogen.

The present invention also relates to functionalized aminoplast resins or aminoplast resin precursors wherein at least one of the amino groups has the formula -NR³CR¹=CH-COR² or -N=CR¹-CH₂-COR², wherein R¹ represents alkyl or aryl, R² represents alkyl, aryl or alkoxy, and R³ represents -H, alkyl, aryl or CH₂OR⁴ wherein R⁴ represents alkyl, aryl, cycloaliphatic or hydrogen and the use of these functionalized aminoplast resins or aminoplast resin precursors as thermosetting resins or crosslinking agents.

Aminoplast resins and aminoplast resin precursors which can be reacted with β-diketoesters or β-diketones can be essentially any of the aminoplast resins known in the art. As used herein, aminoplast resin precursors are generally the diamines or polyamines that can be converted to curable aminoplast resins by reaction with an aldehyde (and optionally a monofunctional alcohol, e.g., methanol, butanol, i-butanol, 2-ethyl hexanol). Examples of useful aminoplast resin precursors include melamine, benzoguanamine, urea, glycoluril, and ethylene diamine. These aminoplast resin precursors can be reacted with aldehydes, such as formaldehyde and butyraldehyde, to form aminoplast resins. Examples of useful aminoplast resins that can be formed from such precursors are well-known in the art, and include trimethylol melamine butylated trimethylol melamine, methylolurea and dimethylolurea.

R¹ represents alkyl (including substituted alkyl), preferably of 1 to 4 carbon atoms (e.g., methyl, ethyl, t-butyl, and more preferably of 1 to 2 carbon atoms. R¹ can also represent aryl (including substituted aryl), preferably of 6 to 20 carbon atoms (e.g., phenyl, naphthyl, 2-chlorophenyl, 4-chlorophenyl, 2-toluyl, 4-toluyl). R² represents alkyl (including substituted alkyl), preferably of 1 to 8 carbon atoms (e.g., methyl, ethyl, n-propyl, n-butyl, i-butyl, 3-chloropropyl, benzyl), aryl as defined for R¹, or alkoxy, preferably of 1 to 8 carbon atoms, and more preferably of 1 to 4 carbon atoms (e.g., ethoxy, t-butoxy). R³ represents hydrogen, alkyl or aryl as defined for R², or -CH₂OR⁴ where R⁴ represents alkyl or aryl as defined for R², hydrogen, or cycloaliphatic (including substituted cycloaliphatic, e.g., cyclohexyl, cyclopentyl, isobornyl).

In a preferred embodiment of the invention, the aminoplast resin or aminoplast resin precursor is melamine or a melamine derivative. Such compounds include those according to the formula: 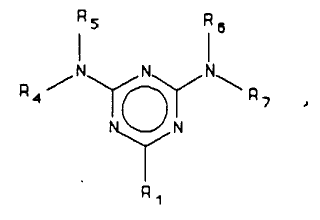 wherein
R₁ is phenyl or 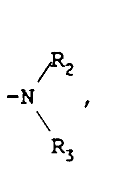 R₂, R₃, R₄, R₅, R₆, and R₇ are each independently -H, alkyl or aryl as defined above for R², -CH₂OR, =CR¹-CH₂-CO-R², -CR¹=CH-CO-R², -CH2-CHR₉-CO-R¹, or -CH₂-O-CO-CH₂-CO-R¹, with the proviso that at least one of R₂, R₃, R₄, R₅, R₆, and R₇ is =CR¹-CH₂-CO-R², -CR¹=CH-CO-R², -CH2-CHR₉-CO-R¹, or -CH₂-O-CO-CH₂-CO-R¹, and when one of R₂, R₃, R₄, R₅, R₆, and R₇ is =CR¹-CH₂-CO-R², the nitrogen to which it is attached does not have another R group attached thereto. According to this formula, R₉ represents -CO-R². R, R¹, and R² are as defined above.

The unsaturated functionality can be incorporated into the aminoplast resin or aminoplast resin precursor in several ways. It can be formed by reacting a β-diketoester or β-diketone with the amino group of an aminoplast resin precursor: 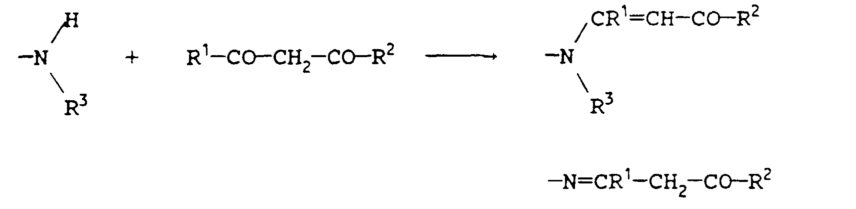 where R¹, R², and R³ are defined above.

Alternatively, a β-diketoester or β-diketone can be reacted with the alkylol- or alkylated alkylol-substituted amino group of the aminoplast resin itself: 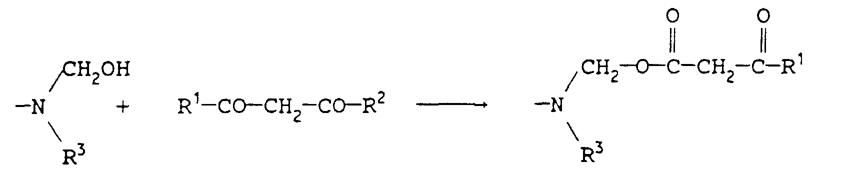 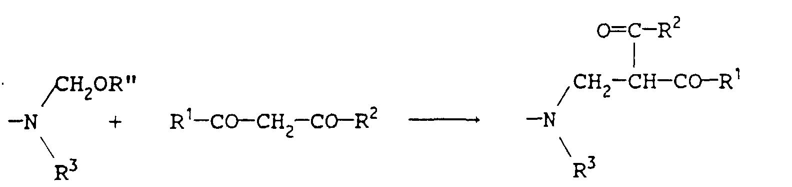 where R¹, R², and R³ are as defined above.

Examples of β-diketoesters that would be useful in the practice of the present invention include t-butyl acetoacetate, ethyl acetoacetate, methyl acetoacetate, and aceto-acetoxy ethyl methacrylate. Additionally, it is contemplated that other β-diketones can be used in the preparation of compounds within the scope of the invention. Such β-diketones include, for example, 1,3-cyclohexanedione, 1,2-cyclopentadicarbonyl, and 2,4-pentanedione.

This invention relates to the incorporation of β-diketones into an aminoplast resin or aminoplast resin precursor by reaction with the aminoplast compound, Even when the unsaturated functionality is incorporated into the aminoplast resin molecule or aminoplast resin precursor molecule, it may be desirable to add additional amounts of a compound such as a β-dicarbonyl to the aminoplast resin composition containing free aldehyde. This can help prevent premature gelation due to cross-linking of the aminoplast resin through reaction of the unsaturated functionality sites on the resin molecule with free aldehyde in the resin composition.

One embodiment of the present invention relates to a method for incorporating the β-diketone group into an aminoplast resin precursor. This method is particularly useful for aminoplast resin precursors that are crystalline in nature, such as imino-functional aminoplast resin precursors, although the method can be advantageously used with non-crystaline aminoplast resin precursors as well. According to this method, the aminoplast resin precursor is suspended in a dipolar aprotic solvent. A β-diketoester compound is added to the suspension, and the mixture is refluxed until a sufficient amount of β-diketoester has reacted with the aminoplast resin precursor, as desired. Examples of useful dipolar aprotic solvents include glycolmethyl ether, diglycolmethyl ether, dimethyl sulfoxide, and dimethyl formamide. For non-crystalline compounds, other solvents may be used.

The invention if further described by the following example.

### Example 1

Melamine crystal (15.2 g) was suspended in 25 g of glycolmethyl ether in a flask equipped with a condenser. To this suspension was added 63.0 g of t-butylacetoacetate. The reaction mixture was heated to reflux and held at reflux for 48 hours. The resulting orange suspension was filtered and the crystals were washed with methyl ethyl ketone. The solvent was then removed, leaving the functionalized melamine. When the functionalized melamine was used to make melamine formaldehyde resin, a 14% reduction in residual formaldehyde level was obtained compared to melamine formaldehyde resin prepared with the unfunctionalized melamine.

## Claims

1. Use of β-diketoesters or β-diketones for reducing the residual aldehyde level in a method for preparing aminoplast resins and/or for reducing the amount of aldehyde released during the cure in a method for curing aminoplast resins wherein the β-diketoesters or β-diketones are reacted with an aminoplast resin or an aminoplast resin precursor thereby incorporating a β-dicarbonyl functionality or an unsaturation functionality into the aminoplast resin or the aminoplast resin precursor wherein the β-dicarbonyl functionality has the formula -NR³CH₂-O-CO-CH₂-CO-R¹ or -NR³CH₂-CH(-CO-R¹) (-CO-R²) and the unsaturation functionality has the formula - NR³CR¹=CH-COR² or -N=CR¹-CH₂-COR², wherein R¹ represents alkyl or aryl, R² represents alkyl, aryl or alkoxy, and R³ represents -H, alkyl, aryl or CH₂OR⁴ wherein R⁴ represents alkyl, aryl, cycloaliphatic or hydrogen.

2. Use according to claim 1 wherein the aminoplast resin is obtained by reacting melamine with an aldehyde and the aminoplast resin precursor is melamine.

3. Use according to claims 1 or 2 wherein R¹ is methyl or ethyl.

4. Use according to claims 1 to 3 wherein R² is methyl, ethyl, ethoxy or t-butoxy.

5. Use according to claim 4 wherein R² is ethoxy or t-butoxy.

6. A functionalized aminoplast resin or aminoplast resin precursor wherein at least one of the amino groups has the formula -NR³CR¹=CH-COR² or -N=CR¹-CH₂-COR², wherein R¹ represents alkyl or aryl, R² represents alkyl, aryl or alkoxy, and R³ represents -H, alkyl, aryl or CH₂OR⁴ wherein R⁴ represents alkyl, aryl, cycloaliphatic or hydrogen.

7. A functionalized aminoplast resin or aminoplast resin precursor according to claim 6 wherein the functionalized aminoplast resin is obtained by reacting melamine with an aldehyde and the functionalized aminoplast resin precursor is melamine.

8. A functionalized aminoplast resin or aminoplast resin precursor according to claims 6 or 7 wherein R¹ is methyl or ethyl.

9. A functionalized aminoplast resin or aminoplast resin precursor according to claims 6 to 8 wherein R² is methyl, ethyl, ethoxy or t-butoxy.

10. A functionalized aminoplast resin or aminoplast resin precursor according to claim 9 wherein R² is ethoxy or t-butoxy.

11. Use of a functionalized aminoplast resin or aminoplast resin precursor according to claims 6 to 10 as thermosetting resin or crosslinking agent.

## Patentansprüche

1. Verwendung von β-Diketoestern oder β-Diketonen zur Verringerung des Aldehydrestgehalts bei einem Verfahren zur Herstellung von Aminoplastharzen und/oder zur Verringerung der bei einem Verfahren zur Härtung von Aminoplastharzen bei der Härtung freigesetzten Aldehydmenge, bei der man die β-Diketoester oder β-Diketone mit einem Aminoplastharz oder Aminoplastharz-Vorläufer umsetzt und so in das Aminoplastharz oder den Aminoplastharz-Vorläufer eine β-Dicarbonylfunktionalität oder eine Ungesättigtheitsfunktionalität einbaut, wobei die β-Dicarbonylfunktionalität die Formel -NR³CH₂-O-CO-CH₂-CO-R¹ oder -NR³CH₂-CH(-CO-R¹) (-CO-R²) und die Ungesättigtheitsfunktionalität die Formel -NR³CR¹=CH-COR² oder -N=CR¹- CH₂-COR², worin R¹ für Alkyl oder Aryl, R² für Alkyl, Aryl oder Alkoxy und R³ für -H, Alkyl, Aryl oder CH₂OR⁴, worin R⁴ Alkyl, Aryl, einen cycloaliphatischen Rest oder Wasserstoff bedeutet, steht, hat.

2. Verwendung nach Anspruch 1, wobei man das Aminoplastharz durch Umsetzung von Melamin mit einem Aldehyd erhält und es sich bei dem Aminoplastharz-Vorläufer um Melamin handelt.

3. Verwendung nach Anspruch 1 oder 2, wobei R¹ für Methyl oder Ethyl steht.

4. Verwendung nach den Ansprüchen 1 bis 3, wobei R² für Methyl, Ethyl, Ethoxy oder t-Butoxy steht.

5. Verwendung nach Anspruch 4, wobei R² für Ethoxy oder t-Butoxy steht.

6. Funktionalisiertes Aminoplastharz oder funktionalisierter Aminoplastharz-Vorläufer, worin mindestens eine der Aminogruppen die Formel -NR³CR¹=CH-COR² oder -N=CR¹-CH₂-COR², worin R¹ für Alkyl oder Aryl, R² für Alkyl, Aryl oder Alkoxy und R³ für -H, Alkyl, Aryl oder CH₂OR⁴, worin R⁴ Alkyl, Aryl, einen cycloaliphatischen Rest oder Wasserstoff bedeutet, steht, hat.

7. Funktionalisiertes Aminoplastharz oder funktionalisierter Aminoplastharz-Vorläufer nach Anspruch 6, wobei man das funktionalisierte Aminoplastharz durch Umsetzung von Melamin mit einem Aldehyd erhält und es sich bei dem funktionalisierten Aminoplastharz-Vorläufer um Melamin handelt.

8. Funktionalisiertes Aminoplastharz oder funktionalisierter Aminoplastharz-Vorläufer nach Anspruch 6 oder 7, wobei R¹ für Methyl oder Ethyl steht.

9. Funktionalisiertes Aminoplastharz oder funktionalisierter Aminoplastharz-Vorläufer nach den Ansprüchen 6 bis 8, wobei R² für Methyl, Ethyl, Ethoxy oder t-Butoxy steht.

10. Funktionalisiertes Aminoplastharz oder funktionalisierter Aminoplastharz-Vorläufer nach Anspruch 9, wobei R² für Ethoxy oder t-Butoxy steht.

11. Verwendung eines funktionalisierten Aminoplastharzes oder Aminoplastharz-Vorläufers nach den Ansprüchen 6 bis 10 als Duroplastharz oder Vernetzer.

## Revendications

1. Utilisation de β-dicétoesters ou de β-dicétones pour réduire le taux d'aldéhyde résiduel tans un procédé de préparation de résines aminoplastes et/ou pour réduire la quantité d'aldéhyde libérée au cours du durcissement dans un procédé de durcissement de résines aminoplastes, dans laquelle les β-dicétoesters ou les β-dicétones sont mis à réagir avec une résine aminoplaste ou un précurseur de résine aminoplaste, ce qui a pour effet d'incorporer une fonctionnalité β-dicarbonyle ou une fonctionnalité à insaturation dans la résine aminoplaste ou le précurseur de résine aminoplaste, la fonctionnalité β-dicarbonyle répondant à la formule -NR³CH₂-O-CO-CH₂-CO-R¹ ou -NR³CH₂-CH(-CO-R¹) (-CO-R²) et la fonctionnalité à insaturation répond à la formule -NR³CR¹=CH-COR² ou -N=CR¹-CH₂-COR², où R¹ représente un groupe alkyle ou aryle, R² représente un groupe alkyle, aryle ou alcoxy et R³ représente -H ou un groupe alkyle, aryle ou CH₂OR⁴, où R⁴ représente un groupe alkyle, aryle, un groupe cycloaliphatique ou un atome d'hydrogène.

2. Utilisation selon la revendication 1, dans laquelle la résine aminoplaste est obtenue par réaction de mélamine avec un aldéhyde et le précurseur de résine aminoplaste est la mélamine.

3. Utilisation selon la revendication 1 ou 2, dans laquelle R¹ est un groupe méthyle ou éthyle.

4. Utilisation selon les revendications 1 à 3, dans laquelle R² est un groupe méthyle, éthyle, éthoxy ou t-butoxy.

5. Utilisation selon la revendication 4, dans laquelle R² est un groupe éthoxy ou t-butoxy.

6. Résine aminoplaste fonctionnalisée ou précurseur de résine aminoplaste fonctionnalisé, dans laquelle au moins un des groupes amino répond à la formule -NR³CR¹=CH-COR² ou -N=CR¹-CH₂-COR², où R¹ représente un groupe alkyle ou aryle, R² représente un groupe alkyle, aryle ou alcoxy et R³ représente -H ou un groupe alkyle, aryle ou CH₂OR⁴, où R⁴ représente un groupe alkyle, aryle, cycloaliphatique ou un atome d'hydrogène.

7. Résine aminoplaste fonctionnalisée ou précurseur de résine aminoplaste fonctionnalisé selon la revendication 6, dans laquelle la résine aminoplaste fonctionnalisée est obtenue par réaction de mélamine avec un aldéhyde et le précurseur de résine aminoplaste fonctionnalisé est la mélamine.

8. Résine aminoplaste fonctionnalisée ou précurseur de résine aminoplaste fonctionnalisé selon la revendication 6 ou 7, dans laquelle R¹ est un groupe méthyle ou éthyle.

9. Résine aminoplaste fonctionnalisée ou précurseur de résine aminoplaste fonctionnalisé selon les revendications 6 à 8, dans laquelle R² est un groupe méthyle, éthyle, éthoxy ou t-butoxy.

10. Résine aminoplaste fonctionnalisée ou précurseur de résine aminoplaste fonctionnalisé selon la revendication 9, dans laquelle R² est un groupe éthoxy ou t-butoxy.

11. Utilisation d'une résine aminoplaste fonctionnalisée ou d'un précurseur de résine aminoplaste fonctionnalisé selon les revendications 6 à 10 en tant que résine thermodurcissable ou agent de réticulation.
